# EUROPEAN PATENT SPECIFICATION

(11) **EP 2 342 968 B1**
(45) Date of publication and mention of the grant of the patent: **21.11.2012**
(21) Application number: 10015867.4
(22) Date of filing: 20.12.2010
(51) Int. Cl.: A01G 9/24

(54) **Solar greenhouse with energy recovery system**
Solartreibhaus mit Energierückgewinnungssystem
Serre solaire avec système de récupération d'énergie

(30) Priority: 07.01.2010 IT BG20100001; 08.11.2010 IT BG20100057
(43) Date of publication of application: 13.07.2011
(73) Proprietor: Agrimec S.n.c. Di Spelgatti & C., 24060 Casazza (BG) (IT)
(72) Inventor: Spelgatti, Sergio, 24060 Casazza (BG) (IT)
(74) Representative: Gatti, Enrico

(56) References cited:
- EP-A2- 0 084 289
- CA-A1- 2 514 707
- DE-A1- 3 501 575
- FR-A1- 2 325 882
- FR-A1- 2 389 318
- FR-A1- 2 549 692
- FR-A1- 2 550 322
- US-A- 3 669 184

## Description

The present invention relates to a thermal plant for a greenhouse, and in particular for a solar greenhouse with an energy recovery system.

Traditional greenhouses are designed with the aim of preventing the internal temperature from varying substantially during the day. In this respect, even in winter the internal temperature can reach very high values (in particular when compared with the external temperature) because of the greenhouse effect produced by solar irradiation.

However the internal temperature must not be able to reach values which are too high and harmful for crops. To satisfy this objective, in traditional greenhouses the surplus energy present in the greenhouse has to be evacuated by natural ventilation (in which case the greenhouse comprises large windows) or by forced ventilation.

Such windows however involve a series of drawbacks such as cost and heat loss.

Another critical aspect of traditional greenhouses is their considerable height, which is made necessary to increase the thermal inertia of the environment and to consequently limit the internal temperature oscillation. The height of the metal structure not only affects the construction cost but also inevitably reduces its wind resistance.

Moreover, in cold periods or during the night, when the temperature can fall by several degrees, a thermal plant must be available to regulate the greenhouse temperature.

Document FR 2 550 322 discloses an installation for heating buildings such as a greenhouse. The installation comprises foldable thermal screens which can be vertically deployed in order to separate the adjacent vaults of the greenhouse and to isolate them thermally from each other, a heat pump being associated with one or more vaults, this heat pump being connected, on the cold side, to a cold loop connected to modular evaporators distributed in each vault and operating as dehumidifiers and, on the hot side, to a radiant heat circuit extending into each vault.The object of the present invention is to provide a greenhouse thermal plant which is more efficient from the energy viewpoint than those of the known art.

This and further objects are attained according to the present invention by a greenhouse comprising: a closed structure covering a ground portion; a thermal plant for regulating the temperature of said closed structure; characterised in that said thermal plant comprises an heat exchanger inside said closed structure but external to the ground, and a heat exchanger buried in said ground portion; said external heat exchanger and said buried heat exchanger being connected together; a liquid circulating through said external heat exchanger and said buried heat exchanger; a fan conveying an air flow towards said heat exchanger external to the ground.

Further characteristics of the invention are described in the dependent claims.

This solution has various advantages over the known art. The thermal plant is designed with the aim of accumulating excess solar energy present within the greenhouse and returning it to the environment via the ground during the night.

This energy is partly lost in traditional greenhouses or simply not used, so allowing it to raise the internal temperature above the required level. The system transforms the heat present in the air into hot water, so cooling the greenhouse during sunlight hours while accumulating this energy within a layer of ground able to store this heat and make it available during night hours. The characteristics and advantages of the present invention will be apparent from the ensuing detailed description of one embodiment thereof, illustrated by way of non-limiting example in the accompanying drawings, in which:
Figure 1 is a schematic view of a greenhouse including a thermal plant, in accordance with a first embodiment of the present invention;
Figure 2 is a perspective view of a heat exchanger located inside said greenhouse but external to the ground, in accordance with the present invention;
Figure 3 is a frontal view of a heat exchanger located inside said greenhouse but external to the ground, in accordance with the present invention;
Figure 4 is a schematic view of greenhouse including a thermal plant, in accordance with a second embodiment of the present invention;
Figure 5 is a graph showing the variation of the temperatures inside and outside the greenhouse, in accordance with the present invention;
Figure 6 shows a greenhouse including an accumulator and a user device able to use the heat recovered from the greenhouse, in accordance with the present invention;
Figure 7 is a graph showing the exchanger bank/ground heat exchange with a hydraulic pump;
Figure 8 is a graph showing the heat exchange with a heat pump between the circuit on the evaporator side and the environment;
Figure 9 is a graph showing the heat exchange with a heat pump between the circuit on the condenser side and the environment.

With reference to the accompanying figures, a greenhouse comprising a thermal plant, in accordance with a first embodiment of the present invention, comprises a covered support structure 10 forming the greenhouse, i.e. a closed structure, isolated from the external environment and positioned on the ground 11.

Inside the structure a tube bank 12 is positioned, in the form of a single tube bent several times on itself (to form a coil) for a length equal to or less than the length of the structure 10.

The tube bank 12 is formed for example with 10 side-by-side tubes close together to form a tube bundle (of substantially square overall cross-section) and joined together by bends. In its most elementary configuration, one end 13 of the tube bank 12 is connected to a hydraulic pump 14, the tube which leaves the pump 14 then being buried.

Below the ground there is a second tube bank 15 consisting of a single tube bent several times on itself (to form a coil) for a length equal to or less than the length of the structure 10.

In this case the second tube bank 15 is formed with side-by-side tubes but at a prefixed distance apart and disposed in a single plane parallel to the ground.

The tube banks 12 and 15 form respectively a heat exchanger of air-water type positioned inside the greenhouse external to the ground, and a heat exchanger buried below the greenhouse.

An insulating layer 16 is placed below the second tube bank 15.

A liquid, preferably water, is inserted in the tube banks 12 and 15.

At the head of the first tube bank 12 a fan 17 is installed to convey an air flow along the surface of the tubes 12 and hence force convective heat exchange between the air and water.

The fan 17 and pump 14 are powered by the electrical energy provided by a power supply unit 18.

In certain geographical areas the power supply unit 18 can comprise photovoltaic panels 19, preferably positioned and fixed (or simply rested) on the first tube bank 12.

The direct and diffused radiation entering the greenhouse is partly intercepted by the surface of the PV modules and converted into electrical energy.

The idea of installing the photovoltaic modules and/or laminates inside the greenhouse guarantees considerable advantages.

Low greenhouse cost notwithstanding the implementation of a photovoltaic plant. In this respect the greenhouse preserves its traditional useful life (normally 10 years) independently of the useful life of the photovoltaic plant (30 years).

The photovoltaic plant costs less because the cost of the support and fixing structure for the photovoltaic modules has no influence, as these are simply rested on the tube bundle and do not require a complex fixing system. Installing the photovoltaic modules inside the greenhouse does not prejudice the cultivation efficiency as it does not project large shadow regions onto the ground, which would be the case if the modules were positioned on the greenhouse roof.

The position of the modules can be easily modified in winter by simple manual action, with the object of increasing their efficiency (which is less in winter, in that the modules have an exposure angle of about 30-35° fixed on the basis of the summer configuration) and hence recuperate the production loss due to the lesser incident solar radiation because of the greenhouse covering mantle.

According to one embodiment of the present invention, for the tubes 12, PVC pipes of diameter 140 mm PN6 were used, whereas for the tubes 15, LDPE pipes of diameter 25 mm PN6 were used.

Although having lower thermal conductivity than steel or aluminium, PVC is more economical and therefore enables the poor material conductivity to be compensated by a greater heat exchanger surface, obtained by using larger diameters.

The first tube bank 12 is designed taking care to limit its height in order not to produce shadow on the cultivation surface, and to limit its width such as not to excessively reduce the cultivable surface.

The tubes 12, concentrated within a small space, transfer their weight (about 14 kg/m each tube) to the greenhouse fixing elements and hence totally or partially perform the function of an above-ground plinth (in certain cases without the need to use cement) by offering sufficient restraining reaction to the foot actions which typically stress the foundations.

The second tube bank 15 is positioned at a depth of 40 cm, taking care not to disturb the crop root system by thermal shock, and to avoid the risk of damaging the buried tubes when working the soil (digging, cutting, sowing, harvesting). The insulating layer consists of an insulating sheet, for example glass wool of thickness between 5 and 10 cm, positioned at one metre from the surface. Limiting this depth involves the risk of overheating the soil. In contrast, an excessive depth causes a large energy loss towards the ground.

In a particularly advantageous embodiment of the present invention, connected to the first tube bank 12 there is a vertical tube 20 comprising a valve 21, which is connected to the gutter 22 of the structure 10, enabling rain water to be collected during the months in which irrigation is necessary whereas heating is not required.

In an advantageous embodiment of the present invention, the system does not comprise a tube bank 12, but instead comprises a heat pump 30 of air-water type, powered by the electric mains 36 or by photoelectric cells 19.

The heat pump 30 is connected (condenser side) to the tubes 32 (outward and return) feeding the tube bank or banks 15 (underground).

In an advantageous embodiment of the present invention, the system comprises one or more tube banks 12, and a heat pump 30 of water-water type powered by the electric mains 36 or by photovoltaic cells 19.

On one side the heat pump 30 is connected to the tubes 31 (outward and return) originating from the tube banks 12, and on another side is connected to the tubes 32 (outward and return) feeding the tube bank or banks 15 (underground). During sunny days, in which the greenhouse tends to heat up, the heat pump 30 cools the tube banks 12 (evaporator side) and produces hot water (condenser side) which is circulated through the second tube banks 15. The heat pump also performs the role of regulating the ambient temperature within the greenhouse.

The extracted heat can be accumulated in an ACC accumulator or immediately used in another place, not necessarily within the ground below the greenhouse. In this case the hot water produced by the heat pump must be diverted towards a user device AB in proximity to the greenhouse which is able to use low temperature heat (for heating during winter or domestic water production in summer). Such a user device AB must however be provided with an efficient accumulator ACC, it being hence convenient to utilize systems for accumulation in the form of latent heat, thus using PCMs (phase change materials). These materials are characterised by low melting points and hence ensure high accumulation capacity per unit volume, and lower temperature difference with respect to the external environment (smaller dimensions, smaller masses and hence stresses, smaller heat exchanger surface, hence lesser dispersion). The phase transition of greatest interest in the technical field is that from solid to liquid and vice versa. For this application the ideal PCMs are the salt hydrates or the paraffins, of which the change of state occurs at a temperature between 0°C and 100°C.

A fraction of the electrical energy required by the system can be generated by a photovoltaic field consisting of photovoltaic solar cells preferably disposed above the tube banks 12.

The energy produced by the photovoltaic plant is totally used by the heat pump and by the fans.

This system is particularly efficient in those geographical areas facing the Mediterranean where the photovoltaic plant will cover the entire energy requirement of the system.

The system requires electrical energy mostly during sunlight hours. Because of this simultaneous production and use of energy, the photovoltaic field can be either of grid connected type or of isolated type, with low capacity storage batteries, hence also utilizable where there is no electricity supply (this is fairly frequently the case in greenhouse installations).

In an even more advantageous embodiment, the plant also comprises a co-generator 35, hence in his case the electrical supply for the plant can come from the mains 36, from the photovoltaic panels 19 or from the co-generator 35 which, inter alia, also provides electrical energy for the possible artificial lighting installation, the irrigation plant and the ventilation and cooling unit used in the summer.

The heat co-generator provides the greenhouse with:
- the complementary amount of thermal energy required by the greenhouse, by always accumulating heat within the ground;
- the entire electrical energy requirement, possibly by exchange on site with the electric grid;
- during sunlight hours, the CO₂ required for carbon fertilization.

The co-generation can function either with a methane gas engine or a diesel engine fed with vegetable oil (renewable solar energy).

By adding CO₂ in greenhouses, production increases up to 40% can be attained. CO₂ is one of the products of combustion and is consequently contained in the offgases of the co-generator 35 present in the offgas stack 38. If the co-generator 35 uses a vegetable oil diesel engine, the carbon dioxide does not need to be extracted from the offgases (in view of their low and acceptable toxicity) which can consequently be directly fed into the greenhouse through the CO₂ feed pipe 39. Their flow is controlled by a motorized damper 40. When carbon dioxide is not required, the offgases are evacuated to the outside.

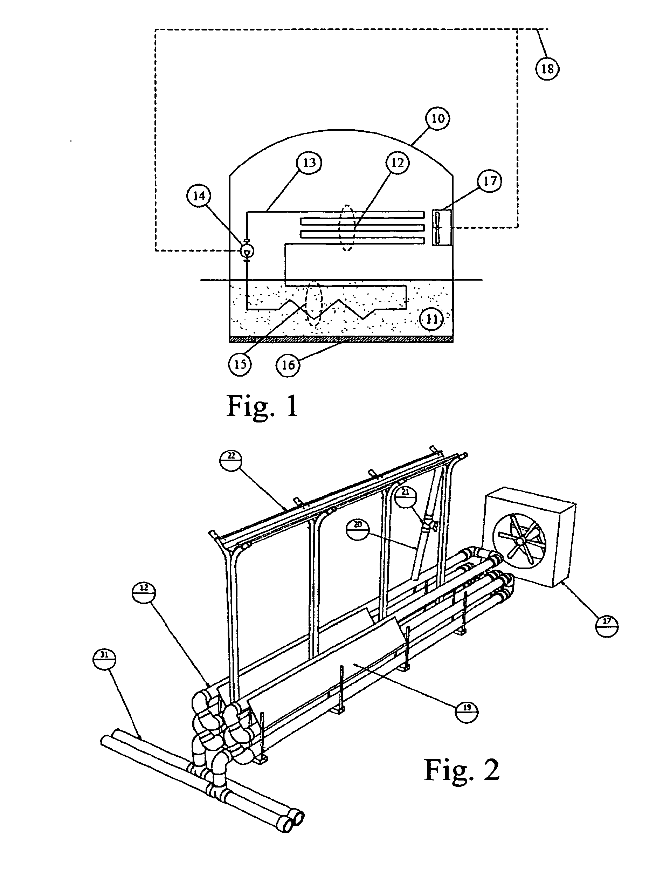

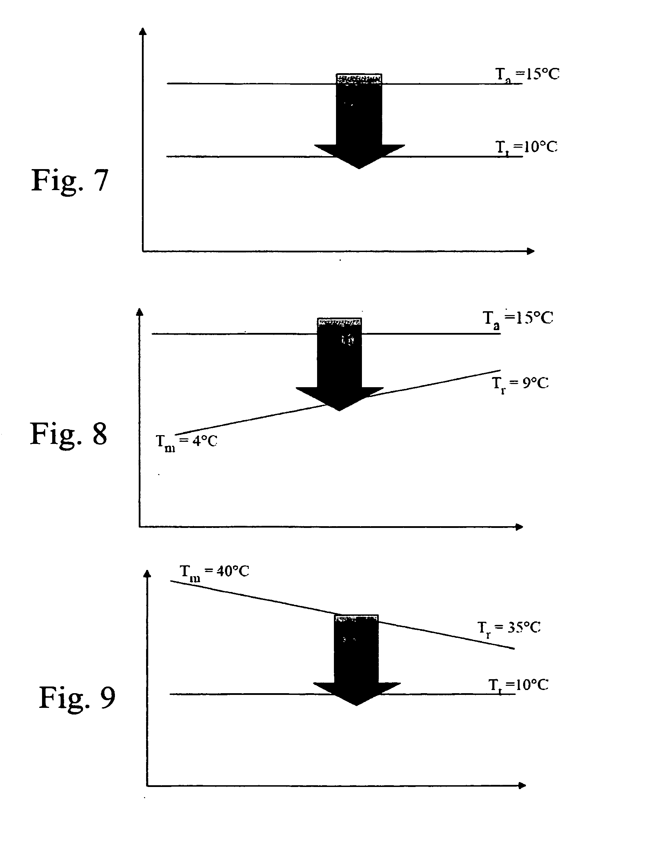

Figure 7 shows the temperature difference utilized by the plant shown in Figure 1, which uses only the hydraulic pump to connect the two tube banks 12 and 15 in series. As can be seen, the limit of this solution is that only a small temperature difference is available.

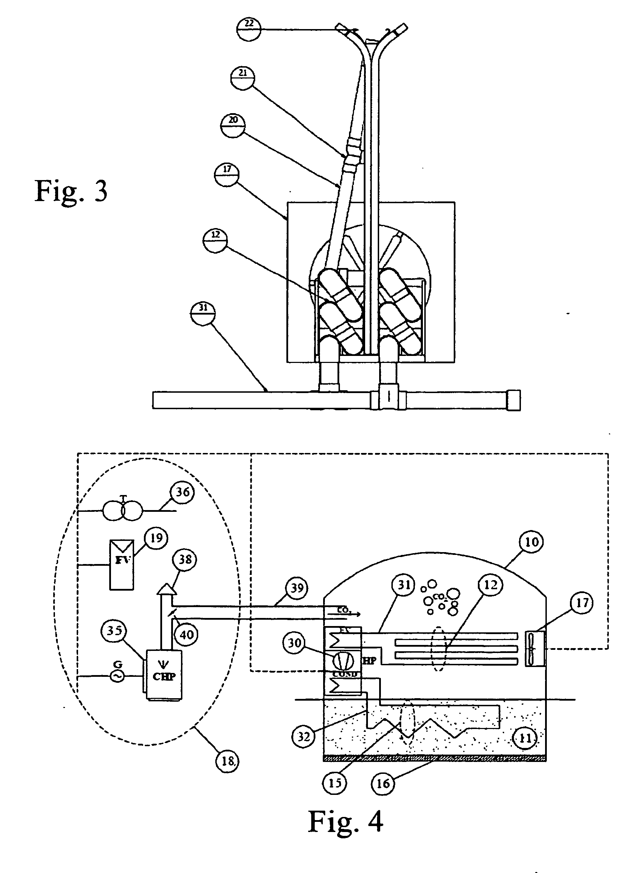

In the case of the plant with the heat pump 30 (Figure 4), for example, with an ambient temperature Ta of 15°C, on the evaporator side (fig. 8) there is a cold water delivery temperature Tm from the heat pump of 4°C and a water return temperature Tr towards the heat pump evaporator of 9°C; on the condenser side (Figure 9) there is a water delivery temperature Tm of 40°C and a water return temperature Tr of 35°C and a ground temperature Tt of 10° C. In this case, because of the use of the heat pump, a temperature difference of significant value is utilized between the environment and the external bank 12, and equally between the buried bank 15 and the ground, to the advantage of system efficiency and performance.

The plant can be used in two different ways.

Winter use. System with pressurized tubes, cooled by heat pump, used as heat exchanger in order to: withdraw the surplus energy present in the greenhouse during the day and return to the greenhouse during the night that energy withdrawn during the day, by reversing the thermodynamic operating cycle of the heat pump. Consequently the ground 11 is cooled (if an excessively high temperature has been reached) and the tube bank 12 is heated, with consequent heating of the environment within the greenhouse. The heat exchange takes place mainly by forced convection (the external surface of the tubes is grazed by the greenhouse air moved by fans installed at the end of the rube bundle). Summer use. System used as heat accumulator by raising the thermal inertia of the greenhouse; as water circulation is not required during this stage, the system can also be used as an initial rain vessel or meteoric water accumulation tank. In this respect, its location below the gutter facilitates rain water collection during the months in which irrigation is necessary whereas heating is not required.

By way of example, a greenhouse was designed for lettuce cultivation at a latitude of 46°.

The greenhouse has a total covered surface area of 9600 m² (160 x 60), with 16 bays, and an average height of 3.5 m.

If well insulated, a greenhouse of this type, if setting a ΔT = 10°C, has a thermal load of 587 kW and an energy requirement of 1600 MWh.

The greenhouse thermal load was calculated assuming that the greenhouse is lined with low conductivity covering materials, limited thermal bridges, and the absence of losses due to ventilation/filtration, hence absence of windows.

The following are listed below for this particular greenhouse: thermal energy requirement, the surplus energy, energy which the plant is able to extract, abd the actual consumption.

| | Days | Thermal energy requirement | Surplus energy | Energy extracted by plant | Actual consumption |
|---|---|---|---|---|---|
| | | kWh | kWh | kWh | kWh |
| September | 30 | 135990 | 384000 | 135990 | 0 |
| October | 31 | 231446 | 107467 | 107467 | 123979 |
| November | 30 | 240000 | 0 | 0 | 240000 |
| December | 31 | 256277 | 0 | 0 | 256277 |
| January | 31 | 256277 | 0 | 0 | 256277 |
| February | 28 | 216524 | 42560 | 42560 | 173964 |
| March | 31 | 181877 | 256267 | 173600 | 8277 |
| April | 30 | 44790 | 648000 | 44790 | 0 |
| | | | | | |
| Total energy | | 1563181 | 1438293 | 504407 | 1058774 |

The plant constructed in accordance with the invention is able to satisfy a power exchange of 50 W/m², such as to enable the energy indicated in the preceding table to be extracted.

In each greenhouse bay a tube bundle 12 is provided consisting of 10 tubes connected in series, formed from PVC PN6, diameter 140 mm.

The tube bank 15 is formed with 23 LDPE polythene tubes PN6, diameter 25 mm. The ground is insulated at one metre depth with a glass wool layer, 0.1 metre thick.

The heat exchanger for a power of 50 W/m² achieved with tubes of PE PN6, diameter 25 mm, requires 7.7 m of tube per m².

At the level of the tube bank 12 there is a water feed temperature of 4°C, a water return temperature of 9°C, with an internal temperature of 15°C.

At the level of the tube bank 15 there is a water feed temperature of 40°C, a water return temperature of 35°C, and a stratum temperature of 5°C.

With reference to the above table, the plant constructed in this manner is able to recover a large part of the surplus energy present in the greenhouse, hence ensuring good energy saving.

With a thermal energy requirement in the winter months for heating the greenhouse of about 1563181 kWh, the plant is able to extract about 504407 kWh of the surplus energy present in the greenhouse, with a saving of 32%.

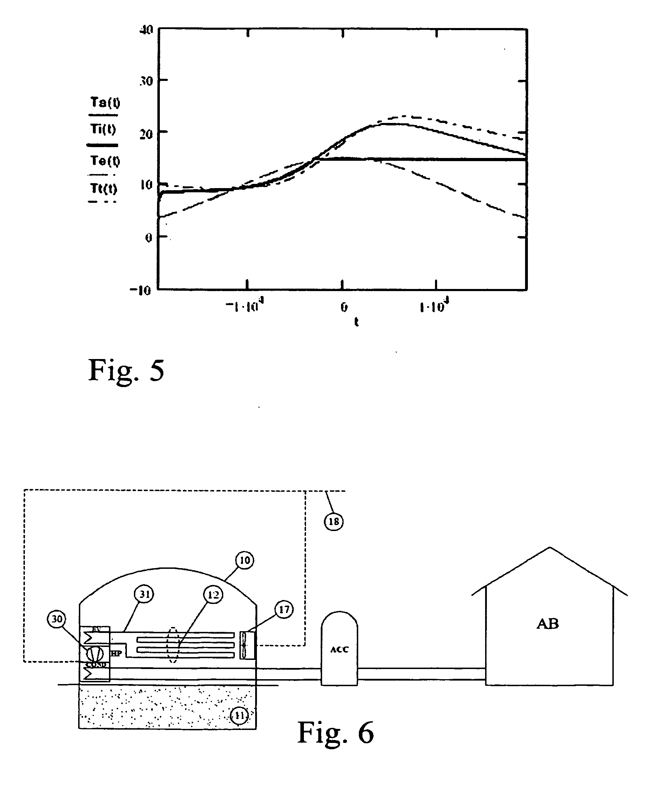

Figure 5 shows the variation in the temperatures concerned. Ta(t) indicates the ambient temperature which would pertain if energy were not accumulated but allowed to grow without restricting the air temperature.

Tint indicates the desired air temperature, being the set point value of the system, that above which the energy accumulation process is activated. It represents the value at which the heat pump and/or the forced ventilation intervenes. In the proposed example it is assumed to be 15°C, i.e. the optimum daily temperature for lettuce.

Ti(t) shows the variation in the internal temperature with time, which as can be seen from the graph exceeds Ta(t) until a certain point at which the value Tint is reached, where Ti(t) = Tint.

The aforedescribed plant can be applied to all greenhouses, however greater efficiency is achieved if the greenhouse is formed with expedients which favour the use of such a plant.

In particular, the greenhouse should preferably follow the following characteristics.

The dimensional aspects influencing heat dispersion: better a single large-dimension greenhouse than one fragmented into numerous small greenhouses.

Discontinuities in the covering materials must be limited to reduce the influence of thermal bridges.

A high degree of air-tightness must be ensured to reduce to a minimum the heat losses due to air renewal and seepage. Correct positioning: its axis must lie north-south; if the greenhouse is to comprise a photovoltaic plant, it must be positioned east-west.

Excellent insulation, roofing with materials comprising an interspace to reduce heat losses by convection and conduction through the roof; these materials must be transparent to the visible spectrum but opaque to infrared in order to reduce energy losses in the form of infrared radiation emitted from the ground.

The greenhouse should be limited in height. Too low a greenhouse heats up too rapidly. The objective to be attained is to utilize this available heat in the best manner. The door can be small as it is used only for entry and exit, and not for ventilation. The basic concept is to prevent thermal energy being wasted and expelled during the day, to then be re-supplied during the night. The aim is to accumulate during the day and to release during the night. This is the principle of the solar greenhouse.

## Claims

1. A greenhouse comprising: a closed structure (10) covering a ground portion (11); a thermal plant for regulating the temperature of said closed structure (10); said thermal plant comprising a heat exchanger (12) inside said closed structure (10) but external to the ground, **characterised in that** the thermal plant further comprises a heat exchanger (15) buried in said ground portion (11); said external heat exchanger (12) and said buried heat exchanger (15) being connected together; a liquid circulating through said external heat exchanger (12) and said buried heat exchanger (15); a fan (17) conveying an air flow towards said heat exchanger (12) external to the ground.

2. A greenhouse as claimed in claim 1, **characterised by** comprising a pump (14) for circulating said liquid through said exchangers (12, 15).

3. A greenhouse as claimed in one or more of the preceding claims, **characterised by** comprising a heat pump (30) which receives said liquid from said external heat exchanger (12) and feeds a liquid to said buried heat exchanger (15).

4. A greenhouse as claimed in one or more of the preceding claims, **characterised in that** said closed structure (10) is powered by photovoltaic cells (19) resting on said heat exchanger (12) external to the ground inside said closed structure (10).

5. A greenhouse as claimed in one or more of the preceding claims, **characterised in that** below said buried heat exchanger (15), said closed structure (10) comprises an insulating layer (16) for said ground portion (11).

6. A greenhouse as claimed in one or more of the preceding claims, **characterised in that** said external heat exchanger (12) and said buried heat exchanger (15) consist of tubes bent on themselves.

7. A greenhouse as claimed in one or more of the preceding claims, **characterised in that** said closed structure (10) is powered by a co-generator (35).

8. A greenhouse as claimed in one or more of the preceding claims, **characterised in that** said external heat exchanger (12) is connected to the gutter (22) of said closed greenhouse structure (10) via a valve (21).

9. A greenhouse as claimed in claim 5, **characterised in that** said insulating layer (16) is an insulating sheet of thickness between 5 and 10 cm, positioned at one metre from the surface.

10. A greenhouse as claimed in one or more of the preceding claims, **characterised in that** said heat exchanger (12) inside said closed structure (10) but external to the ground transfers its weight to greenhouse fixing elements and hence totally or partly performs the
function of an above-ground plinth.

## Patentansprüche

1. Treibhaus, umfassend: eine geschlossene Struktur (10), die einen Bodenteil (11) abdeckt; eine Wärmeanlage zum Regulieren der Temperatur der geschlossenen Struktur (10), wobei die Wärmeanlage einen Wärmetauscher (12) innerhalb der geschlossenen Struktur (10), jedoch außerhalb des Bodens umfasst, **dadurch gekennzeichnet, dass** die Wärmeanlage ferner umfasst: einen Wärmetauscher (15), der in dem Bodenteil (11) unterirdisch verlegt ist; wobei der außen liegende Wärmetauscher (12) und der unterirdische Wärmetauscher (15) miteinander verbunden sind; wobei eine Flüssigkeit durch den außen liegenden Wärmetauscher (12) und den unterirdischen Wärmetauscher (15) zirkuliert; wobei ein Lüfter (17) den außerhalb des Bodens liegenden Wärmetauscher (12) mit einem Luftstrom beaufschlagt.

2. Treibhaus gemäß Anspruch 1, **dadurch gekennzeichnet, dass** es eine Pumpe (14) zum Zirkulieren-Lassen der Flüssigkeit durch die Wärmetauscher (12, 15) umfasst.

3. Treibhaus gemäß einem oder mehreren der vorhergehenden Ansprüche, **dadurch gekennzeichnet, dass** es eine Wärmepumpe (30) umfasst, welche die Flüssigkeit von dem außen liegenden Wärmetauscher (12) aufnimmt und eine Flüssigkeit an den unterirdischen Wärmetauscher (15) schickt.

4. Treibhaus gemäß einem oder mehreren der vorhergehenden Ansprüche, **dadurch gekennzeichnet, dass** die geschlossene Struktur (10) durch Photovoltaikzellen (19) mit Strom versorgt wird, die auf dem Wärmetauscher (12) sitzen, der innerhalb der geschlossenen Struktur (10) außerhalb des Bodens liegt.

5. Treibhaus gemäß einem oder mehreren der vorhergehenden Ansprüche, **dadurch gekennzeichnet, dass** die geschlossene Struktur (10) unterhalb des unterirdischen Wärmetauschers (15) eine Isolierschicht (16) für den Bodenteil (11) umfasst.

6. Treibhaus gemäß einem oder mehreren der vorhergehenden Ansprüche, **dadurch gekennzeichnet, dass** der außen liegende Wärmetauscher (12) und der unterirdische Wärmetauscher (15) aus gefalteten Rohren bestehen.

7. Treibhaus gemäß einem oder mehreren der vorhergehenden Ansprüche, **dadurch gekennzeichnet, dass** die geschlossene Struktur (10) über einen Generator mit Kraft-Wärme-Kopplung (35) mit Strom versorgt wird.

8. Treibhaus gemäß einem oder mehreren der vorhergehenden Ansprüche, **dadurch gekennzeichnet, dass** der außen liegende Wärmetauscher (12) über ein Ventil (21) mit der Ablaufrinne (22) der geschlossenen Treibhausstruktur (10) verbunden ist.

9. Treibhaus gemäß Anspruch 5, **dadurch gekennzeichnet, dass** die Isolierschicht (16) eine Isolierbahn einer Dicke zwischen 5 und 10 cm ist, die einen Meter unter der Erdoberfläche angeordnet ist.

10. Treibhaus gemäß einem oder mehreren der vorhergehenden Ansprüche, **dadurch gekennzeichnet, dass** der Wärmetauscher (12) innerhalb der geschlossenen Struktur (10), jedoch außerhalb des Bodens sein Gewicht auf Treibhaus-Fixierungselemente überträgt und daher ganz oder teilweise die Funktion eines oberirdischen Gebäudesockels ausfüllt.

## Revendications

1. Serre comprenant : une structure fermée (10) couvrant une portion de sol (11) ; une centrale thermique pour réguler la température de ladite structure fermée (10) ; ladite centrale thermique comprenant un échangeur de chaleur (12) à l'intérieur de ladite structure fermée (10) mais à l'extérieur du sol **caractérisée en ce que** la centrale thermique comprend en outre un échangeur de chaleur (15) enterré dans ladite portion de sol (11); ledit échangeur de chaleur externe (12) et ledit échangeur de chaleur enterré (15) étant raccordés ensemble ; un liquide circulant à travers ledit échangeur de chaleur externe (12) et ledit échangeur de chaleur enterré (15) ; un ventilateur (17) acheminant un flux d'air vers ledit échangeur de chaleur (12) externe au sol.

2. Serre selon la revendication 1, **caractérisée en ce qu'**elle comprend une pompe (14) pour faire circuler ledit liquide à travers lesdits échangeurs (12, 15).

3. Serre selon un ou plusieurs des revendications précédentes, **caractérisée en ce qu'**elle comprend une pompe à chaleur (30) qui reçoit ledit liquide en provenance dudit échangeur de chaleur externe (12) et délivre un liquide audit échangeur de chaleur enterré (15).

4. Serre selon une ou plusieurs des revendications précédentes, **caractérisée en ce que** ladite structure fermée (10) est alimentée en énergie par des cellules photovoltaïques (19) reposant sur ledit échangeur de chaleur (12) externe au sol à l'intérieur de ladite structure fermée (10).

5. Serre selon une ou plusieurs des revendications précédentes, **caractérisée en ce que** sous ledit échangeur de chaleur enterré (15), ladite structure fermée (10) comprend une couche isolante (16) pour ladite portion de sol (11).

6. Serre selon une ou plusieurs des revendications précédentes, **caractérisée en ce que** ledit échangeur de chaleur externe (12) et ledit échangeur de chaleur enterré (15) consistent en des tubes pliés sur eux-mêmes.

7. Serre selon une ou plusieurs des revendications précédentes, **caractérisé en ce que** ladite structure fermée (10) est alimentée en énergie par un cogénérateur (35).

8. Serre selon une ou plusieurs des revendications précédentes, **caractérisée en ce que** ledit échangeur de chaleur externe (12) est raccordé à la gouttière (22) de ladite structure de serre fermée (10) via une soupape (21).

9. Serre selon la revendication 5, **caractérisé en ce que** ladite couche isolante (16) est une feuille isolante d'une épaisseur comprise entre 5 et 10 cm, positionnée à un mètre de la surface.

10. Serre selon une ou plusieurs des revendications précédentes, **caractérisée en ce que** ledit échangeur de chaleur (12) à l'intérieur de ladite structure fermée (10) mais à l'extérieur du sol transfère son poids vers des éléments de fixation de serre et réalise donc totalement ou partiellement la fonction d'un soubassement au-dessus du sol.
